# FASCICULE DE BREVET EUROPEEN

(11) **EP 1 225 437 B1**
(45) Date de publication et mention de la délivrance du brevet: **11.06.2003**
(21) Numéro de dépôt: 02290098.9
(22) Date de dépôt: 15.01.2002
(51) Int. Cl.: G01N 1/22, G01N 33/497, B65D 77/26, B01D 35/02

(54) **Dispositif de maintien d'un solide dans un tube, et appareil de test utilisant un tel dispositif**
Vorrichtung zum Halten eines Feststoffs in einem Röhrchen und Testvorrichtung mit einer solchen Halterungsvorrichtung
Device for holding a solid material in a tube, and test device using this holding device

(30) Priorité: 19.01.2001 FR 0100733
(43) Date de publication de la demande: 24.07.2002
(73) Titulaire: Contralco, 34150 Cignac (FR)
(72) Inventeur: Monblanc, Philippe, 34130 Mauguio (FR); Lacan, Bruno, 34800 Clermont l'Herault (FR)
(74) Mandataire: Cabinet Hirsch

(56) Documents cités:
- DE-A- 3 539 446
- DE-U- 29 823 377
- FR-A- 2 484 283
- FR-A- 2 497 954
- US-A- 3 411 629
- US-A- 3 870 492
- US-A- 4 350 037
- US-A- 4 758 521

## Description

La présente invention se rapporte aux dispositifs permettant de détecter la présence d'une substance donnée dans un fluide, et plus spécifiquement aux enceintes contenant un réactif sensible à la présence de la substance, telles que des éthylotests par exemple.

La détection de la présence d'une substance dans un fluide est réalisée en mettant le fluide susceptible de contenir la substance en contact avec un réactif réagissant avec la substance à déceler ; la teneur détectée en substance dans le fluide dépend de la quantité de réactif qui a réagi au contact de la substance. La qualité de la mesure du dispositif est alors étroitement liée au positionnement du réactif dans l'enceinte. A titre d'exemple, la présente invention peut être mise en oeuvre dans un éthylotest servant à mesurer la présence et, le cas échéant, la teneur en alcool éthylique dans l'air expiré par une personne. Un éthylotest se compose d'une part d'un ballon à remplir d'air et d'autre part, d'un tube contenant un réactif sensible à la présence en alcool éthylique. Le fonctionnement d'un éthylotest est le suivant : la personne dont on désire contrôler l'alcoolisme, souffle dans le ballon à travers un embout de sorte à le remplir complètement. Le tube contenant le réactif sensible à l'alcool est ensuite inséré dans l'embout, puis le ballon est pressé de manière à le vider lentement et entièrement au travers du tube contenant le réactif. Si l'air expiré a une teneur en alcool éthylique supérieure à une certaine valeur, le réactif l'indique, par exemple par changement de couleur. De plus, un trait de jauge pratiqué sur le tube, à un certain niveau par rapport au réactif, permet de savoir si le seuil de calibration de teneur en alcool est dépassé. Le réactif doit donc d'une part être convenablement tassé afin de permettre à l'air de circuler à travers le réactif et d'autre part, la position du réactif doit être invariante par rapport au trait de jauge pour comparer la teneur en alcool avec le seuil de calibration.

Différentes solutions ont été proposées pour le positionnement et le maintien du réactif. Le document FR-A-2 497 954 divulgue un dispositif permettant de détecter la présence d'une substance dans un fluide en préconisant la circulation du fluide dans un tube en matière plastique au travers d'un réactif en granules. Le tube en plastique comporte à l'une de ses extrémités une cloison transversale venue de moulage avec le tube. Après l'introduction du réactif en granules dans le tube, celui-ci est fermé par un bouchon en plastique présentant des perforations et formant une pièce unique venue de moulage avec un disque transversal et un anneau déformable interposé entre le disque et le bouchon. Le disque tasse les granules contre la cloison transversale grâce à la force générée par la déformation de l'anneau. Cependant, certains réactifs s'oxydent au contact de l'air et le tube en plastique n'assurant pas une étanchéité suffisante à l'air, l'ensemble doit être conservé dans un emballage en verre fermé par un opercule pour protéger les granules contre l'oxydation.

FR-A-2 484 283 décrit un filtre pour retenir des granulés en position dans un tube. Le filtre présente des lamelles de blocage permettant le blocage du filtre le long d'un tube. Dans un domaine différent, DE-A-35 39 446 décrit un dispositif pour bloquer des circuits électroniques dans un tube. Les circuits électroniques sont bloqués par un moyen en forme de U. Les branches du U bloquent le moyen en translation le long du tube grâce à des dents. Sur le moyen est en outre prévu une agrafe servant à retirer le moyen du tube. Dans le mode de réalisation de la figure 8 de ce document, l'agrafe est sur la face frontale du moyen. L'agrafe ne peut alors pas servir à écarter les branches du moyen.

Pour la détection de la présence et la mesure de la teneur d'une substance dans un fluide, les dispositifs actuellement sur le marché (Red Line, DRÄGER, Mesir, ...) proposent de faire circuler un fluide dans un corps tubulaire en verre au travers d'un réactif en granules maintenu par deux grilles métalliques insérées dans le tube. Les tolérances du diamètre intérieur des tubes de verre utilisés étant de 3 à 4 dixièmes de millimètre, l'effort de tenue des grilles métalliques dans le tube varie dans de grandes proportions. Si le diamètre du tube de verre est aux tolérances supérieures, l'effort de tenue des grilles métalliques dans le tube de verre est minimum ce qui pose deux problèmes :
- lors de l'assemblage du dispositif, si une force constante est appliquée sur la grille pour la positionner, le tassage du réactif est maximum ce qui entraîne un écrasement puis la dégradation des granules et donc des variations de la réaction lors de l'utilisation (intensité de couleur, amplitude et vitesse).
- lorsque le dispositif est soumis à des chocs ou vibrations, les grilles se déplacent dans le tube de verre et n'assurent plus leur fonction de maintien et de positionnement du réactif.

Si le diamètre du tube de verre est aux tolérances inférieures, l'effort de tenue des grilles métalliques dans le tube de verre est maximum ce qui pose deux problèmes :
- lors de l'introduction des grilles métalliques dans le tube en verre, celles-ci se bombent et provoquent un important risque de dégradation ou de casse du tube de verre ;
- lors de l'assemblage du dispositif, si une force constante est appliquée sur la grille pour la positionner, le tassage du réactif n'est pas suffisamment assuré. Ceci entraîne des variations de la réaction lors de l'utilisation (intensité de couleur, amplitude et vitesse).

De plus, la grille ne garantit pas un passage de fluide homogène sur toute la surface de contact avec le réactif, ni reproductible d'une grille à l'autre. Ceci génère des effluves, de position et d'amplitude aléatoires, réduisant la précision de la mesure.
En conséquence, il y a un besoin de disposer d'un dispositif qui permette de positionner et maintenir un réactif solide dans un tube pour la détection de la présence et la mesure de la teneur d'une substance dans un fluide. Pour cela, l'invention concerne un dispositif de maintien d'un solide dans un tube selon la revendication 1.

Dans un mode de réalisation, le disque présente des ouvertures transversales.

Dans autre un mode de réalisation, la partie élastiquement déformable présente la forme d'un tube avec une fente sur une partie de sa longueur.

Dans un autre mode de réalisation, la partie élastiquement déformable comprend deux pattes.

L'invention concerne également un appareil de test comprenant :
- un tube,
- deux dispositifs de maintien,
- un réactif entre les extrémités des dispositifs de maintien.

Le tube de l'appareil est, par exemple, en verre. Dans un mode de réalisation le réactif est sous forme de granules. Les faces des disques ont des ouvertures transversales inférieures à la taille des granules.

Dans un mode de réalisation, l'appareil comprend un opercule qui obture le tube à chacune de ses extrémités.

Dans un autre mode de réalisation le diamètre des extrémités des dispositifs de maintien est au plus égal au diamètre intérieur du tube.

L'invention concerne également un procédé d'assemblage d'un appareil comprenant les étapes de :
- introduction dans un tube d'un dispositif de maintien ;
- introduction dans le tube d'un réactif ;
- introduction dans le tube d'un deuxième dispositif de maintien.

Dans un mode de réalisation, le procédé comprend en outre l'étape d'obturation du tube par un opercule à chacune de ses extrémités.

D'autres caractéristiques et avantages de l'invention apparaîtront à la lecture de la description détaillée qui suit des modes de réalisation de l'invention, donnés à titre d'exemple uniquement et en références aux dessins, sur lesquels :
- la figure 1 représente en section transversale un filtre ;
- la figure 2 représente une vue de dessous de la figure 1 du filtre ;
- la figure 3 représente une section transversale d'un dispositif de maintien selon un mode de l'invention ;
- la figure 4 représente une section transversale d'un appareil de détection d'une substance dans un fluide.

Dans la description qui suit, les termes « dispositif de maintien » désignent les éléments permettant d'immobiliser en un emplacement déterminé un corps solide le long d'un tube. Le corps solide immobilisé par le dispositif de maintien peut être un corps solide compact ou bien sous forme de poudre ou de granules. Le terme « tube » désigne un moyen de confinement dudit corps solide, à travers lequel un fluide circule en vue de réaliser la détection d'une substance dans le fluide.

L'invention concerne un dispositif de maintien disposé à l'intérieur d'un tube. Il comprend un filtre et un ressort. Le filtre a un disque, tel qu'une grille par exemple, et une partie élastiquement déformable qui s'étend transversalement par rapport à une surface du disque dans une direction. Le filtre a un diamètre au niveau du disque au plus égal au diamètre interne du tube. Un ressort est disposé à l'intérieur de la partie élastiquement déformable de sorte à la solliciter contre les parois du tube et immobiliser le filtre le long de celui-ci. Il est ensuite possible de remplir le tube d'un corps solide qui soit retenu de chaque côté par un dispositif de maintien, ces derniers laissant toutefois circuler un fluide à travers le filtre.

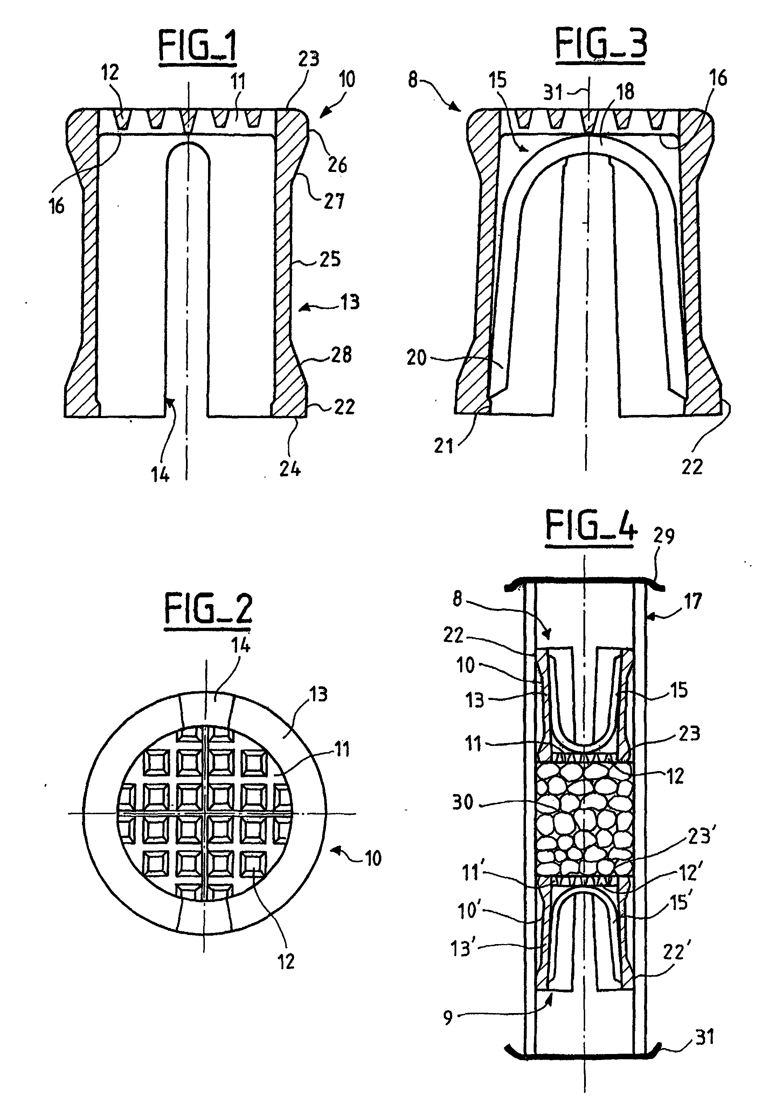

La figure 1 représente en section transversale un filtre 10 ayant une partie élastiquement déformable 13 de forme tubulaire. L'une des extrémités 23 du filtre est obturée par un disque 11, l'autre extrémité 24 étant laissée ouverte. Le disque 11 est par exemple une grille. Le filtre 10 est réalisé, par injection ou moulage, en une matière conférant une rigidité à la structure, de préférence en matière plastique (par exemple, en polystyrène ou PVC). La partie élastiquement déformable 13 peut ainsi être déformée de manière élastique lorsque l'on pince ou que l'on écarte ses parois. La position de la figure 1 est la position de repos.

Dans l'exemple de la figure 1, la partie élastiquement déformable 13 est un tube partiellement fendu dans le sens de la longueur. La partie élastiquement déformable 13 est sensiblement perpendiculaire au disque 11.

La figure 2 représente une vue de dessous d'un filtre 10 de la figure 1. La partie élastiquement déformable 13 a une de ses extrémités 23 obturée par un disque 11 pourvue de perforations 12. Dans l'exemple de la figure 2, les perforations du disque 11 sont réparties sur la surface du disque 11 de sorte que celui-ci forme une grille permettant un écoulement d'un fluide à travers le filtre homogène sur toute la surface du disque 11. Le filtre comporte deux fentes 14 diamétralement opposées et pratiquées axialement sur une partie des parois de la partie élastiquement déformable 13 à partir de son extrémité 24. On peut prévoir un nombre plus important de fentes de sorte à conférer à la partie élastiquement déformable 13 une rigidité moindre.

La figure 3 représente une section transversale d'un dispositif de maintien 8 comprenant le filtre 10 et dont l'extrémité 23 de la partie élastiquement déformable 13 est obturée par le disque 11. Un ressort 15 est placé dans le filtre écartant ainsi les parois de la partie élastiquement déformable 13. Le ressort est de préférence en métal de sorte à exercer une force de déformation constante sur la partie élastiquement déformable 13. Dans l'exemple de la figure 3, le ressort 15 est une pièce en forme de U placée à l'intérieur du filtre 10. La base 18 du ressort 15, repose contre la surface 16 du disque 11 partir duquel la partie élastiquement déformable 13 fait saillie. Les extrémités 20 des branches 19 du ressort 15 reposent sur un épaulement 21 pratiqué sur la face interne de la partie élastiquement déformable 13. L'épaulement 21 est pratiqué à une distance du disque 11 de sorte que le ressort 15 soit immobilisé axialement en translation et que ses extrémités 20 sollicitent le filtre 10 à son extrémité libre 24. L'épaulement 21 peut être annulaire de sorte que le positionnement angulaire du ressort 15 autour de l'axe 31 du filtre 10 soit facilité.

Lorsque le ressort 15 est inséré dans le filtre 10, celui-ci subit une déformation radiale de ses parois. La déformation radiale est de plus en plus importante à mesure que l'on s'éloigne de l'extrémité 23. Le diamètre intérieur de la partie élastiquement déformable 13 à l'extrémité 24 devient plus grand que celui de l'extrémité 23 obturée par la grille 11. Le ressort 15 déforme le filtre 10 en vue du positionnement de ce dernier à l'intérieur d'une enceinte, tel qu'un tube. Sur la figure 1, l'enveloppe externe du filtre 10 s'évase légèrement en deux surfaces tronconiques 27, 28 en direction des extrémités 23, 24 qui se terminent par deux zones annulaires 22, 26. Le diamètre externe des zones annulaires 22, 26 du filtre 10 est supérieur au diamètre externe d'une partie 25 située entre ces zones annulaires 22, 26. On peut prévoir que le diamètre externe du filtre soit constant sur toute la longueur.

La figure 4 représente un tube 17 dans lequel deux dispositifs de maintien 8 et 9 selon l'invention sont placés de manière à immobiliser un corps 30 en un emplacement déterminé. Le diamètre externe des dispositifs de maintien 8, 9 est inférieur au diamètre interne du tube 17 de sorte que les dispositifs de maintien 8, 9 coulissent librement à l'intérieur du tube 17. Lorsque les ressorts 15, 15' sont respectivement placés dans les filtres 10, 10', les parois des filtres 10, 10' sont écartées les unes des autres et sont sollicitées contre les parois du tube 17. Les dispositifs de maintien 8, 9 sont alors immobilisés axialement dans le tube 17. On peut prévoir que seule la zone annulaire 22, 22' soit en contact avec la paroi du tube 17 de sorte à solliciter les parois des filtres 10, 10' dans la zone où leur déformation est la plus importante afin que l'effort nécessaire à la déformation utile de la partie élastiquement déformable 13, 13' des filtres 10, 10' soit négligeable. Les ressorts 15, 15' sont conçus pour que leur effort reste constant dans les fourchettes de tolérance du tube. La tenue des dispositifs de maintien 8, 9 dans le tube 17 peut être ajustée à 350 ± 50 g, ce qui permet un maintien et un tassage du corps 30 répétitif et maîtrisé. Cette valeur est la force nécessaire pour déplacer un des dispositifs de maintien à l'intérieur du tube.

Le dispositif de maintien 8 est introduit dans le tube 17 de la manière suivante.

Le ressort 15 est inséré dans le filtre 10 de sorte à écarter les parois du filtre 10. Le filtre 10 ainsi déformé est introduit dans le tube 17 en introduisant en premier lieu l'extrémité 23. A cette extrémité, le diamètre extérieur du dispositif de maintien 8 est inférieur à celui du tube 17. A mesure que le dispositif de maintien 8 est enfoncé, son diamètre externe devient progressivement plus grand que le diamètre interne du tube 17, du fait de la déformation par le ressort 15. Par une pression plus importante sur l'extrémité 24, la surface tronconique 28 coopère avec un bord du tube 17. Une force contraire à la force de déformation du moyen 15 rétracte les parois du dispositif de maintien 8 en direction de la position de repos, permettant ainsi à la totalité du dispositif de maintien de pénétrer à l'intérieur du tube 17. Il est possible de continuer à exercer une pression sur l'extrémité 24 afin d'apporter le dispositif de maintien 8 dans sa position finale le long du tube 17. Le dispositif de maintien 8 s'immobilise en translation le long de l'axe du tube 17 grâce à la force de déformation du ressort 15 pressant la zone 22 contre les parois du tube 17.

Le dispositif de maintien 8 peut être utilisé pour maintenir un corps 30 dans le tube 17. Un premier dispositif de maintien 8 est en premier lieu introduit dans le tube 17 de la manière décrite ci-dessus. Le corps 30, dimensionné de manière à pouvoir entrer dans le tube, est ensuite déposé dans celui-ci, contre le disque 11, du côté où la partie élastiquement déformable 13 n'est pas en saillie. Un deuxième dispositif de maintien 9 est ensuite introduit dans le tube 17 de la manière décrite ci-dessus mais par le côté du tube 17 opposé à celui par lequel le premier dispositif de maintien 8 était introduit. Les deux dispositifs de maintien 8, 9 ont leur extrémité 23, 23' en regard, le corps 30 étant interposé entre les deux disques 11, 11'. Le corps 30 est maintenu dans sa position par la déformation de la partie élastiquement déformable 13, 13' de chacun des dispositifs de maintien 8, 9 grâce aux efforts exercés par les ressorts 15, 15'.

Les forces de déformation exercée par les ressorts 15, 15' pour immobiliser les dispositifs de maintien 8, 9 le long du tube 17 sont suffisantes pour immobiliser le filtre et le corps 30 en place. Dans l'hypothèse où le corps 30 est une poudre ou des granules, le dimensionnement des perforations 12, 12' des disques 11, 11' est tel que les grains du corps 30 ne passent pas au travers du disque mais que le fluide puisse s'écouler au travers de l'ensemble. Le diamètre des dispositifs de maintien 8, 9 à leur zone annulaire 26 et 26' est au plus égale au diamètre interne du tube 17. Le diamètre des dispositifs de maintien 8, 9 peut être inférieur à celui interne du tube 17, mais tel que le corps 30, sous forme de granules ou de poudre, ne puisse pas passer entre les parois du tube 17 et les zones annulaires 26 et 26' des dispositifs de maintien 8, 9.

Le filtre 10 peut être mis par exemple en oeuvre dans un tube d'éthylotest pour mesurer la présence et, le cas échéant, la teneur en alcool éthylique dans l'air expiré par une personne. Si l'air expiré a une teneur en alcool éthylique supérieure à une certaine valeur, le réactif l'indique, par exemple par changement de couleur. Un trait de jauge pratiqué sur le tube, à un certain niveau par rapport au réactif, permet de savoir si le seuil de calibration est dépassé. Le dispositif de maintien selon l'invention permet d'une part de convenablement tasser le réactif afin de permettre à l'air de circuler à travers le réactif et d'assurer d'autre part au réactif une position invariante par rapport au trait de jauge.

Le réactif utilisé est, par exemple, du gel de silice imprégné d'une solution sulfochromique sous forme de granules sensibles au contact de l'air. Il est maintenu dans le tube 17 entre deux éléments de maintien 8,9 selon l'invention. Le diamètre des disques 11, 11' est tel que les granules ne peuvent pas passer entre les disques et les parois du tube ; les granules, friables et toxiques, ne peuvent pas non plus se coincer entre les disques 11, 11' et les parois du tube 17 de sorte à éviter une dégradation du réactif pouvant entraîner d'une part une variation de la réaction et d'autre part le passage des granules dégradées au travers des disques 11, 11'.

La mise en oeuvre du dispositif de maintien dans un tube pour éthylotest permet un conditionnement plus simple du tube 17 contenant le réactif 30, le tube 17 pouvant être fermé par un opercule 29, 31 à chacune de ses extrémités. L'opercule est par exemple une pastille soudée à chacune des extrémités du tube. Les opercules 29, 31 sont alors perforés ou arrachés de chacune des extrémités pour utiliser le tube dans un éthylotest.

L'invention ne se limite pas aux modes de réalisations décrits ci-dessus uniquement à titre d'exemple.

Par exemple, selon un autre mode de réalisation, le filtre 10 comporte une partie élastiquement déformable 13 transverse au disque 11, mais qui n'est pas perpendiculaire à celui-ci. La partie élastiquement déformable 13 constitue un évasement à mesure que l'on s'écarte du disque 11, de telle sorte que l'extrémité 23 du filtre ait un diamètre externe supérieur au diamètre interne du tube 17. Le filtre 10 est alors déformé par pincement à mesure qu'il est introduit dans le tube 17 et ses parois sont pressées contre les parois du tube 17 de manière à immobiliser le filtre 10 le long du tube 17. Le ressort 15 sollicite alors la partie élastiquement déformable 13 contre les parois du tube 17, pour éviter le fluage de celle-ci et le déplacement du filtre 10 le long du tube 17.

Dans encore un mode de réalisation, la partie élastiquement déformable 13 est constituée par deux pattes ou plus, qui sont sollicitées contre les parois du tube 17 par le ressort 15.

Dans encore un mode de réalisation, les perforations 12 peuvent être de forme cylindrique, avec une répartition en quinconce.

## Revendications

1. Dispositif de maintien d'un solide dans un tube (17), le dispositif comprenant un filtre (10) constitué d'un disque (11) et d'une partie (13) élastiquement déformable transverse au disque, le dispositif étant **caractérisé en ce qu'**il comprend de plus un ressort (15), distinct du filtre (10), sollicitant la partie (13) élastiquement déformable contre les parois du tube (17).

2. Dispositif de maintien selon la revendication 1, **caractérisé en ce que** le disque (11) présente des ouvertures transversales.

3. Dispositif de maintien selon la revendication 1 ou 2, **caractérisé en ce que** la partie (13) élastiquement déformable présente la forme d'un tube avec une fente (14) sur une partie de sa longueur.

4. Dispositif de maintien selon la revendication 1 ou 2, **caractérisé en ce que** la partie (13) comprend deux pattes.

5. Appareil de test comprenant :
- un tube (17),
- deux dispositifs de maintien (8, 9) selon les revendications 1 à 4,
- un réactif (30) entre les extrémités (23, 23') des dispositifs de maintien (8, 9).

6. Appareil selon la revendication 5, **caractérisé en ce que** le tube (17) est en verre.

7. Appareil selon la revendication 5 ou 6, **caractérisé en ce que** le réactif (30) est sous forme de granules.

8. Appareil selon la revendication 7, **caractérisé en ce que** les disques (11, 11') ont des ouvertures transversales 12 inférieures à la taille des granules.

9. Appareil selon l'une des revendications 5 à 8, **caractérisé en ce qu'**un opercule (29, 31) obture le tube (17) à chacune de ses extrémités.

10. Appareil selon l'une des revendications 5 à 9, **caractérisé en ce que** le diamètre des extrémités (23, 23') est au plus égal au diamètre intérieur du tube (17).

11. Procédé d'assemblage d'un appareil selon l'une des revendications 5 à 10 comprenant les étapes de :
- introduction dans un tube (17) d'un dispositif de maintien (8) selon l'une des revendications 1 à 4 ;
- introduction dans le tube (17) d'un réactif (30) ;
- introduction dans le tube (17) d'un deuxième dispositif de maintien (9) selon l'une des revendications 1 à 4.

12. Procédé selon la revendication 11, **caractérisé en ce qu'**il comprend en outre l'étape d'obturation du tube (17) par un opercule (29, 31) à chacune de ses extrémités.

## Claims

1. Device for holding a solid in a tube (17), the device comprising a filter (10) constituted by a disc (11) and an elastically deformable part (13) transverse to the disc, the device being **characterized in that** it further comprises a spring (15), separate from the filter (10), pressing the elastically deformable part (13) against the walls of the tube (17).

2. Holding device according to Claim 1, **characterized in that** the disc (11) has transverse apertures.

3. Holding device according to Claim 1 or 2, **characterized in that** the elastically deformable part (13) is in the form of a tube with a slit (14) over part of its length.

4. Holding device according to Claim 1 or 2, **characterized in that** the part (13) comprises two tabs.

5. A test apparatus comprising:
- a tube (17);
- two holding devices (8, 9) according to Claims 1 to 4; and
- a reactant (30) between the ends (23, 23') of the holding devices (8, 9).

6. The apparatus according to Claim 5, **characterized in that** the tube (17) is made of glass.

7. The apparatus according to Claim 5 or 6, **characterized in that** the reactant (30) is in the form of granules.

8. The apparatus according to Claim 7, **characterized in that** the discs (11, 11') have transverse apertures (12) smaller than the size of the granules.

9. The apparatus according to one of Claims 5 to 8, **characterized in that** a cap (29, 31) closes off the tube (17) at each of its ends.

10. The apparatus according to one of Claims 5 to 9, **characterized in that** the diameter of the ends (23, 23') is at most equal to the inside diameter of the tube (17).

11. Method of assembling an apparatus according to one of Claims 5 to 10, comprising the steps of:
- introducing a holding device (8) according to one of Claims 1 to 4 into a tube (17);
- introducing a reactant (30) into the tube (17); and
- introducing a second holding device (9) according to one of Claims 1 to 4 into the tube (17).

12. Method according to Claim 11, **characterized in that** it furthermore includes the step of closing off the tube (17) with a cap (29, 31) at each of its ends.

## Patentansprüche

1. Haltevorrichtung für einen Körper in einem Rohr (17), wobei die Vorrichtung einen Filter (10) aufweist, der aus einer Scheibe (11) und aus einem Teil (13), das quer zur Scheibe elastisch deformierbar ist, zusammengesetzt ist, wobei die Vorrichtung **dadurch gekennzeichnet ist, daß** sie darüberhinaus eine Feder (15) aufweist, die verschieden ist Von dem Filter (10), die das elastisch deformierbare Teil (13) gegen die Wände des Rohrs (17) belastet.

2. Haltevorrichtung nach Anspruch 1, **dadurch gekennzeichnet, daß** die Scheibe (11) Queröffnungen aufweist.

3. Haltevorrichtung nach Anspruch 1 oder 2, **dadurch gekennzeichnet, daß** das elastisch deformierbare Teil (13) die Form eines Rohres mit einem Schlitz (14) an einem Teil seiner Länge aufweist.

4. Haltevorrichtung nach Anspruch 1 oder 2, **dadurch gekennzeichnet, daß** das Teil (13) zwei Klauen aufweist.

5. Versuchsapparat mit:
- einem Rohr (17),
- zwei Haltevorrichtungen (8, 9) nach den Ansprüchen 1 bis 4,
- ein Reagens (30) zwischen den Enden (23, 23') der Haltevorrichtungen (8, 9).

6. Versuchsapparat nach Anspruch 5, **dadurch gekennzeichnet, daß** das Rohr (17) aus Glas gebildet ist.

7. Versuchsapparat nach Anspruch 5 oder 6, **dadurch gekennzeichnet, daß** das Reagens (30) in Form von Körnern vorliegt.

8. Versuchsapparat nach Anspruch 7, **dadurch gekennzeichnet, daß** die Scheiben (11, 11') Queröffnungen (12) aufweisen, die kleiner als die Abmessung der Körner sind.

9. Versuchsapparat nach einem der Ansprüche 5 bis 8, **dadurch gekennzeichnet, daß** ein Deckel (29, 31) das Rohr (17) an jedem seiner Enden verschließt.

10. Versuchsapparat nach einem der Ansprüche 5 bis 9, **dadurch gekennzeichnet, daß** der Durchmesser der Enden (23, 23') höchstens gleich dem Innendurchmesser des Rohres (17) ist.

11. Verfahren zum Zusammenbau eines Apparats nach einem der Ansprüche 5 bis 10 mit den Schritten:
- Einführen einer Haltevorrichtung (8) nach einem der Ansprüche 1 bis 4 in ein Rohr (17);
- Einführen eines Reagens (30) in das Rohr (17);
- Einführen einer zweiten Haltevorrichtung (9) nach einem der Ansprüche 1 bis 4 in das Rohr (17).

12. Verfahren nach Anspruch 11, weiter **gekennzeichnet durch** einen Schritt des Verschließens des Rohrs (17) mit einem Dekkel (29, 31) an jedem seiner Enden.
